# EUROPEAN PATENT SPECIFICATION

(11) **EP 3 065 125 B1**
(45) Date of publication and mention of the grant of the patent: **06.07.2022**
(21) Application number: 16158216.8
(22) Date of filing: 02.03.2016
(51) Int. Cl.: G09G 3/36

(54) **DISPLAY PANEL AND DISPLAY APPARATUS HAVING THE SAME**
ANZEIGETAFEL UND ANZEIGEVORRICHTUNG DAMIT
PANNEAU D'AFFICHAGE ET APPAREIL D'AFFICHAGE DOTE DE CELUI-CI

(30) Priority: 05.03.2015 KR 20150031098
(43) Date of publication of application: 07.09.2016
(73) Proprietor: Samsung Display Co., Ltd., Gyeonggi-do 17113 (KR)
(72) Inventor: OH, Won-Sik, Seoul (KR); KIM, Tae-Jin, Gyeonggi-do (KR); AHN, Kuk-Hwan, Gyeonggi-do (KR)
(74) Representative: Mounteney, Simon James

(56) References cited:
- EP-A1- 3 054 443
- EP-A2- 2 953 127
- EP-A2- 2 993 662
- KR-A- 20100 129 666
- US-A1- 2008 284 758

## Description

### TECHNICAL FIELD

Embodiments of the present inventive concept relate to a display panel, and more particularly, embodiments of the present inventive concept relate to a display panel and a display apparatus having the display panel.

### DISCUSSION OF THE RELATED ART

A display apparatus such as a liquid crystal display apparatus may include a display panel and a driving circuit configured to drive the display panel. The display panel may include a plurality of gate lines, a plurality of data lines and a plurality of pixels. The plurality of pixels may be arranged in a matrix configuration on a divisional area divided by the plurality of gate lines and the plurality of data lines.

Data voltages having a positive or a negative polarity may be applied to the plurality of pixels. A horizontal or a vertical line may be perceived by a viewer when pixels having the same polarity are consecutively arranged.

The plurality of pixels may be connected to an upper gate line or a lower gate line. A brightness of pixels connected to the upper gate line may be different from a brightness of pixels connected to the lower gate line due to a manufacturing defect. As a result, if pixels connected to the upper or lower gate lines are consecutively arranged in a vertical direction, a vertical line may be perceived by a viewer.

KR 2010 0129666A relates to the liquid crystal display comprising the pixel array including the liquid crystal cells of the form of matrix in which multiple gate lines are crossed toward multiple data lines and which is driven with the cross-over structure of the lines according to voltages applied to the pixel electrode and common electrode; data driving circuit which supplies data voltage in which the polarity makes a reverse turn in data lines into the fixed time period; and the polarity of the gate driving circuit for supplying the gate pulse to gate lines and data voltage and the module power circuit which inverts the polarity of the alternating current common voltage to the above-mentioned fixed time period so that the opposite polarity is the alternating current common voltage is supplied to the common electrode.

US20080284758 A1 relates to a liquid crystal display and a method of driving the same. The liquid crystal display includes a liquid crystal display panel having a plurality of gate lines and a plurality of data lines formed on a substrate to cross each other, and a plurality of pixels respectively connected to the plurality of gate lines and the plurality of data lines; a data driving unit for outputting data signals through a plurality of channel terminals; and a line selection unit for applying the data signals to alternately arranged first data line blocks having data lines arranged adjacent to one side of corresponding pixels and second data line blocks having data lines arranged adjacent to the other side of corresponding pixels.

EP2953127 A2 relates to a display device. The display device includes: a plurality of gate lines extending in a first direction; a plurality of data lines extending in a second direction that intersects the first direction; and a plurality of pixels connected to the gate lines and the data lines, wherein the pixels include pixels h-th row pixels (h is a natural number) and (h+1)-th row pixels, which are adjacent to each other in the second direction, with a (k+1)-th gate line (k is a natural number) therebetween among the gate lines; and a first pixel displaying a first color and connected to the (k+1)-th gate line among the h-th row pixels and a second pixel displaying the first color and connected to the (k+1)-th gate line among the (h+1)-th row pixels are spaced apart from each other in the first direction and receive different polarities of data voltages.

EP3054443 A1 relates to a display apparatus. The display apparatus includes a plurality of gate lines configured to receive gate signals and extending in a first direction, a plurality of data lines configured to receive data voltages and extending in a second direction that intersects the first direction, a plurality of pixels connected to the gate lines and data lines, and a plurality of inversion lines configured to receive inversion voltages having polarities opposite to those of the data voltages and extending in the second direction.

EP2993662 A2 relates to a display apparatus includes gate lines extending in a first direction, data lines extending in a second direction crossing the first direction, and pixels connected to the gate lines and the data lines. The pixels include pixels arranged in a k-th row and pixels arranged in a (k+1)th row disposed adjacent to the pixels arranged in the k-th row in the second direction. An (i+1)th gate line is disposed between the pixels in the k-th row and the pixels in the (k+1)th row. A first pixel arranged in a g-th column among the pixels arranged in the k-th row and a second pixel arranged in the g-th column among the pixels arranged in the (k+1)th row are connected to a j-th data line. The pixels arranged in the k-th row are alternately connected to an i-th gate line and the (i+1)th gate line.

### SUMMARY

The present invention is directed to a display apparatus according to claim 1.

### BRIEF DESCRIPTION OF THE DRAWINGS

The above and other features and aspects of the present inventive concept will be made more apparent by describing in detailed embodiments thereof with reference to the accompanying drawings, in which:
FIG. 1 illustrates a block diagram of a display apparatus according to embodiments of the present inventive concept;
FIG. 2A illustrates a diagram of a pixel arrangement of a display panel of the display apparatus illustrated in FIG. 1, according to the embodiments of the present inventive concept;
FIG. 2B illustrates a diagram of a pixel arrangement of a display panel of the display apparatus illustrated in FIG. 1, according to an example not covered by the claimed invention;
FIG. 2C illustrates a diagram of a pixel arrangement of a display panel of the display apparatus illustrated in FIG. 1, according to an example not covered by the claimed invention;
FIG. 2D illustrates a diagram of a pixel arrangement of a display panel of the display apparatus illustrated in FIG. 1, according to an example not covered by claimed invention;
FIG. 3A illustrates a diagram indicating a polarity of each data line of the display panel illustrated in FIG. 2A, according to an example not covered by the claimed invention;
FIG. 3B illustrates a diagram indicating a polarity of each data line of the display panel illustrated in FIG. 2A, according to the embodiments of the present inventive concept.

### DETAILED DESCRIPTION

Embodiments of the present inventive concept will be explained in detail with reference to the accompanying drawings.

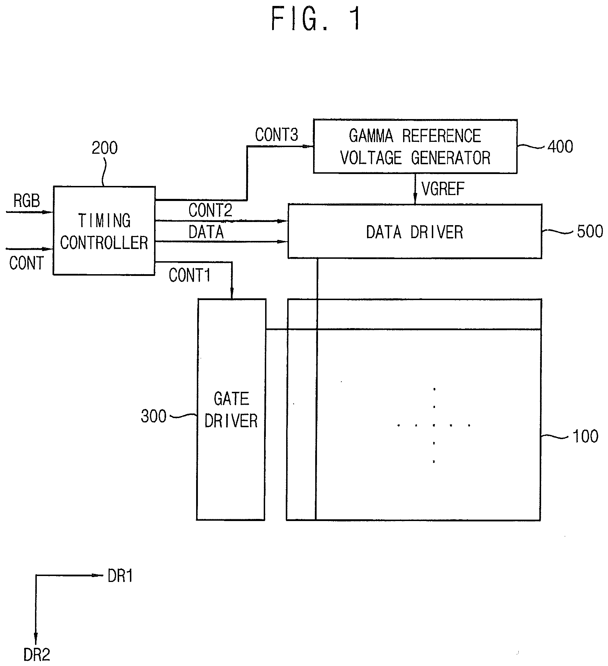

FIG. 1 illustrates a block diagram of a display apparatus according to embodiments of the present inventive concept.

Referring to FIG. 1, the display apparatus includes a display panel 100 and a panel driver. The panel driver includes a timing controller 200, a gate driver 300, a gamma reference voltage generator 400 and a data driver 500.

The display panel 100 includes a display region for displaying an image and a peripheral region adjacent to the display region.

According to embodiments of the present inventive concept, the display panel 100 includes a plurality of gate lines, a plurality of data lines, and a plurality of pixels connected to the gate lines and the data lines. The gate lines may extend in the first direction DR1 and the data lines may extend in a second direction DR2 crossing the first direction DR1. According to an embodiment of the present inventive concept, the data lines and the gate lines are substantially perpendicular to each other.

In some embodiments of the present inventive concept, the pixels may include a switching element, a liquid crystal capacitor, and a storage capacitor. The liquid crystal capacitor and the storage capacitor of each pixel may be electrically connected to the switching element of the corresponding pixel. The pixels may be arranged in a matrix configuration.

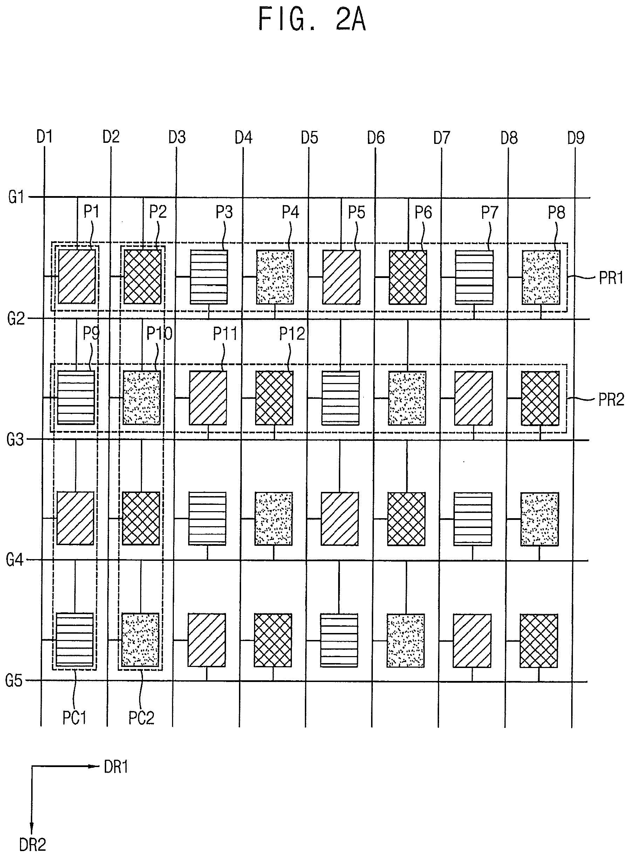

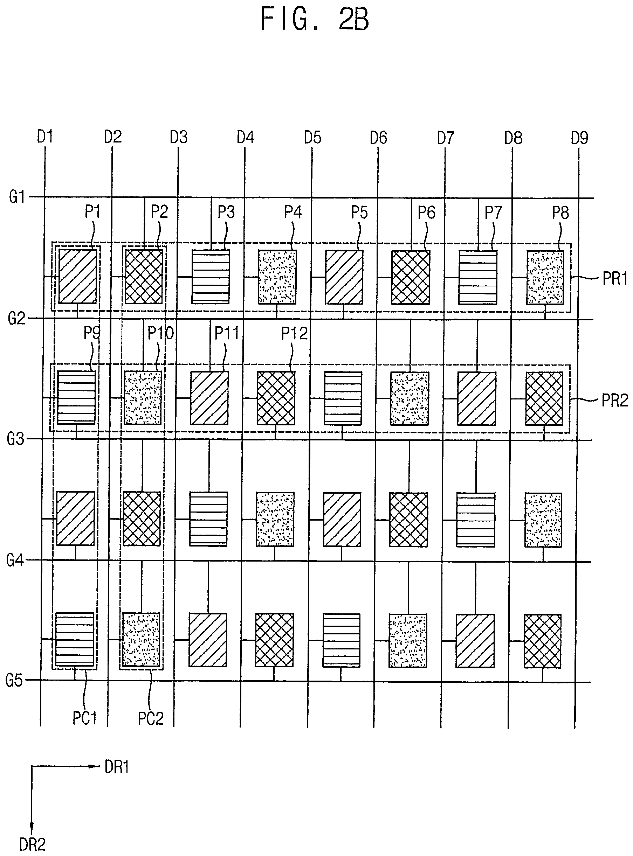

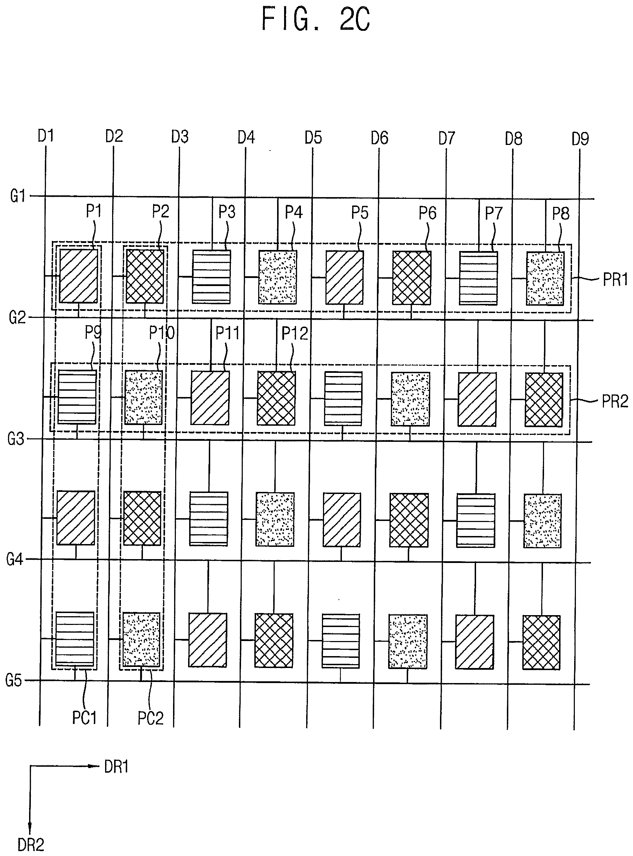

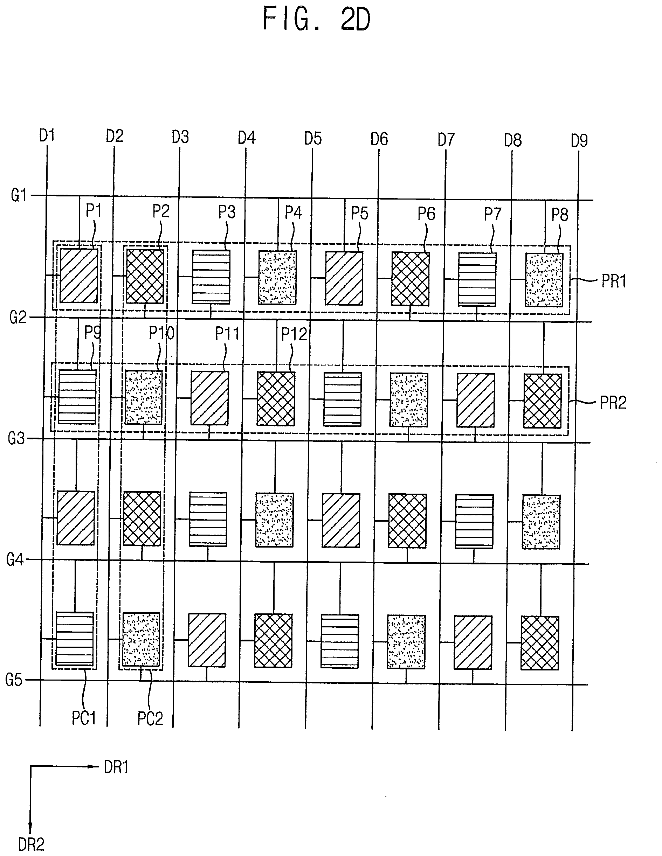

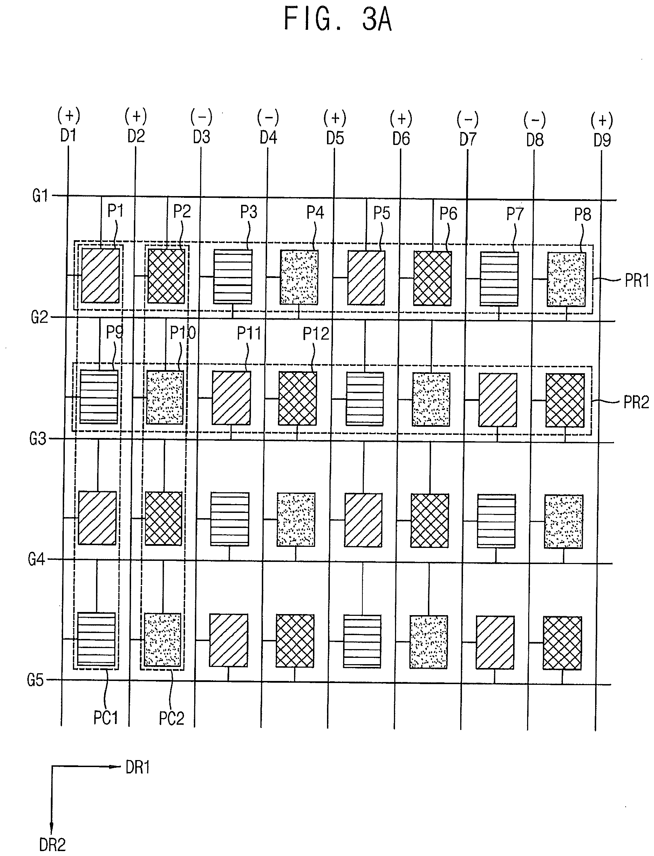

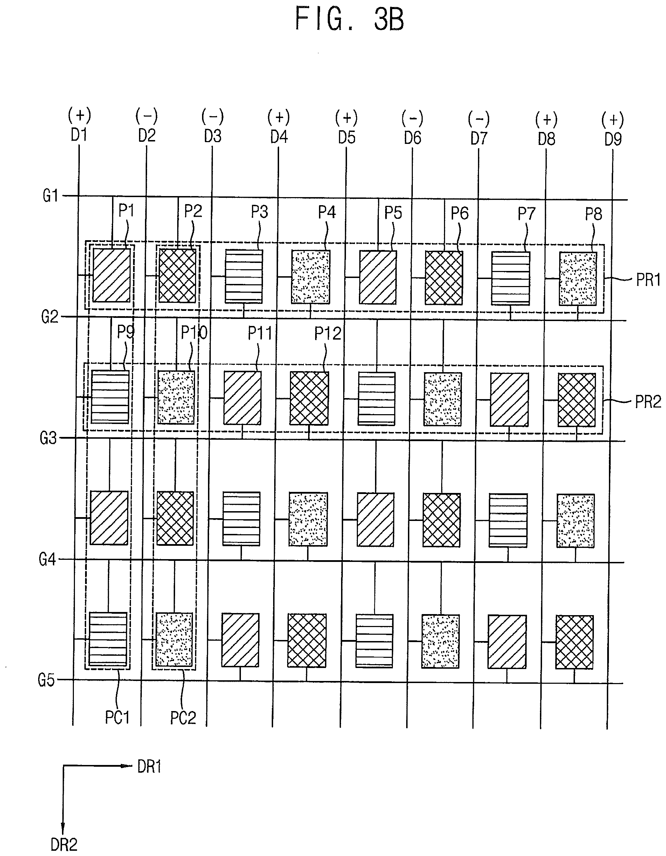

The display panel 100 will be described in detail with reference to FIGS. 2A, 2B, 2C, 2D, 3A and 3B.

The timing controller 200 may receive input image data RGB and an input control signal CONT from an external device. The input image data RGB may include red image data R, green image data G and blue image data B. The input control signal CONT may include a master clock signal and a data enable signal. The input control signal CONT may further include a vertical synchronizing signal and a horizontal synchronizing signal.

The timing controller 200 may generate a first control signal CONT1, a second control signal CONT2, a third control signal CONT3 and a data signal DATA based on the input image data RGB and the input control signal CONT.

The timing controller 200 may generate the first control signal CONT1 for controlling operations of the gate driver 300 based on the input control signal CONT. The timing controller 200 may output the first control signal to the gate driver 300. The first control signal may include a vertical start signal and a gate clock signal.

The timing controller 200 may generate the second control signal CONT2 for controlling operations of the data driver 500 based on the input control signal CONT. The timing controller 200 may output the second control signal CONT2 to the data driver 500. The second control signal CONT2 may include a horizontal start signal and a load signal.

The timing controller 200 may generate the data signal DATA based on the input image data RGB. The timing controller 200 may output the data signal DATA to the data driver 500.

The timing controller 200 may generate the third control signal CONT3 for controlling operations of the gamma reference voltage generator 400 based on the input control signal CONT. The timing controller 200 may output the third control signal CONT3 to the gamma reference voltage generator 400.

The gate driver 300 may generate gate signals for driving the gate lines in response to the first control signal received from the timing controller 200. The gate driver 300 may sequentially output the gate signals to the gate lines.

In some embodiments of the present inventive concept, the gate driver 300 may be directly mounted (e.g., disposed) on the display panel 100, or may be connected to the display panel 100 as a tape carrier package (TCP) type. Alternatively, the gate driver 300 may be integrated in the peripheral region of the display panel 100.

The gamma reference voltage generator 400 may generate a gamma reference voltage VGREF in response to the third control signal CONT3 received from the timing controller 200. The gamma reference voltage generator 400 may output the gamma reference voltage VGREF to the data driver 500. The level of the gamma reference voltage VGREF may correspond to grayscales of a plurality of pixel data included in the data signal DATA.

In some embodiments of the present inventive concept, the gamma reference voltage generator 400 may be disposed in the timing controller 200, or may be disposed in the data driver 500.

The data driver 500 may receive the second control signal CONT2 and the data signal DATA from the timing controller 200. The data driver 500 may receive the gamma reference voltage VGREF from the gamma reference voltage generator 400. The data driver 500 may convert the data signal DATA to data voltages having analogue levels based on the gamma reference voltage VGREF. The data driver 500 may output the data voltages to the data lines.

In some embodiments of the present inventive concept, the data driver 500 may be directly mounted on the display panel 100, or may be connected to the display panel 100 as a TCP type. Alternatively, the data driver 500 may be integrated in the peripheral region of the display panel 100.

FIG. 2A illustrates a diagram of a pixel arrangement of a display panel of the display apparatus illustrated in FIG. 1, according to the embodiments of the present inventive concept.

Referring to FIGS. 1 and 2A, according to the embodiments of the present inventive concept, the display panel 100 includes a plurality of gate lines, a plurality of data lines and a plurality of pixels.

The gate lines extend in the first direction DR1. The gate lines include a first gate line G1 and a second gate line G2 adjacent to the first gate line G1. The gate lines further include a third gate line G3 adjacent to the second gate line G2, a fourth gate line G4 adjacent to the third gate line G3 and a fifth gate line G5 adjacent to the fourth gate line G4.

The data lines extend in the second direction DR2 crossing the first direction DR1. The data lines include first through fourth data lines D1, D2, D3 and D4 sequentially arranged along the first direction DR1. The data lines may further include fifth through ninth data lines D5, D6, D7, D8 and D9 sequentially arranged along the first direction DR1. The fifth data line D5 may be adjacent to the fourth data line D4.

Each of the pixels includes a plurality of sub-pixels. For example, each of the pixels may include two sub-pixels. The sub-pixels may be arranged in a matrix configuration. Rows of the matrix are disposed between the plurality of gate lines. Columns of the matrix are disposed between the plurality of data lines. Each of the sub-pixels is be connected to one of the plurality of the gate lines and one of the plurality of data lines.

First column sub-pixels disposed on a first column PCI of the matrix is connected to the first data line D1. Second column sub-pixels disposed on a second column PC2 of the matrix adjacent to the first column PC1 is connected to the second data line D2. Thus, sub-pixels may be connected to a data line disposed on the left side of the sub-pixels. Alternatively, sub-pixels may be connected to a data line disposed on the right side of the sub-pixels.

According to embodiments of the present inventive concept, first row sub-pixels disposed on a first row PR1 of the matrix are alternately connected to the first gate line G1 and the second gate line G2 by a unit (e.g., pair) of two sub-pixels. A first pair of two adjacent sub-pixels, from among the plurality of sub-pixels of the first row PR1, such as sub-pixels P1 and P2, are connected to the first gate line G1. A second pair of two adjacent sub-pixels, from among the plurality of sub-pixels of the first row PR1, such as sub-pixels P3 and P4, are connected to the second gate line G2. The sub-pixel P3 may be adjacent to the sub-pixel P2. Second row sub-pixels disposed on a second row PR2 of the matrix adjacent to the first row PR1 are alternately connected to the second gate line G2 and the third gate line G3 by a unit of two sub-pixels. A first pair of two adjacent sub-pixels, from among the plurality of sub-pixels of the second row PR2, such as sub-pixels P9 and P10, are connected to the second gate line G2. A second pair of two adjacent sub-pixels, from among the plurality of sub-pixels of the second row PR2, such sub-pixels P11 and P12, may be connected to the third gate line G3. The sub-pixel P11 may be adjacent to the sub-pixel P10. According to an embodiment of the present inventive concept, the first sub-pixel PI disposed on the first row PR1 and the first column PCI of the matrix is connected to the first gate line G1, a ninth sub-pixel P9 disposed on the second row PR2 and the first column PCI of the matrix is connected to the second gate line G2.

According to the embodiment of the present inventive concept, the first row PR1 sub-pixels include first through fourth sub-pixels PI, P2, P3 and P4. The first through fourth sub-pixels P1, P2, P3 and P4 are disposed between the first and second gate lines G1 and G2 and sequentially arranged along the first direction DR1. The first sub-pixel PI and the second sub-pixel P2 are connected to the first gate line G1. The third sub-pixel P3 and the fourth sub-pixel P4 are connected to the second gate line G2.

According to the embodiment of the present inventive concept, the first row PR1 sub-pixels include fifth through eighth sub-pixels P5, P6, P7 and P8 that may be disposed between the first and second gate lines G1 and G2. The fifth through eighth sub-pixels P5, P6, P7 and P8 may be sequentially arranged along the first direction DR1. The fifth sub-pixel P5 may be adjacent to the fourth sub-pixel P4 along the first direction DR1. The second row sub-pixels include ninth through twelfth sub-pixels P9, P10, P11 and P12 disposed between the second and third gate lines G2 and G3. The ninth sub-pixel P9 is adjacent to the first sub-pixel PI along the second direction DR2. The tenth sub-pixel P10 is adjacent to the second sub-pixel P2 along the second direction DR2. The eleventh sub-pixel P11 is adjacent to the third sub-pixel P3 along the second direction DR2. The twelfth sub-pixel P12 is adjacent to the fourth sub-pixel P4 along the second direction DR2.

According to an embodiment of the present inventive concept, each of the gate lines may be alternately connected to two sub-pixels at an upper side with respect to each of the gate lines and two sub-pixels at a lower side with respect to each of the gate lines. For example, the second gate line G2 may be sequentially connected to the ninth and tenth sub-pixels P9 and P10 disposed on the second row and the third and fourth sub-pixels P3 and P4 disposed on the first row.

According to an embodiment of the present inventive concept, the first sub-pixel P1 is disposed between the first and second data lines D1 and D2. The first sub-pixel P1 is electrically connected to the first gate line G1. The second sub-pixel P2 may be disposed between the second and third data lines D2 and D3. The second sub-pixel P2 is electrically connected to the first gate line G1. The third sub-pixel P3 is disposed between the third and fourth data lines D3 and D4. The third sub-pixel P3 is electrically connected to the second gate line G2. The fourth sub-pixel P4 is disposed between the fourth and fifth data lines D4 and D5. The fourth sub-pixel P4 is electrically connected to the second gate line G2.

According to an embodiment of the present inventive concept, the fifth sub-pixel P5 is disposed between the fifth and sixth data lines D5 and D6. The fifth sub-pixel P5 may be electrically connected to the first gate line G1. The sixth sub-pixel P6 may be disposed between the sixth and seventh data lines D6 and D7. The sixth sub-pixel P6 may be electrically connected to the first gate line G1. The seventh sub-pixel P7 may be disposed between the seventh and eighth data lines D7 and D8. The seventh sub-pixel P7 may be electrically connected to the second gate line G2. The eighth sub-pixel P8 may be disposed between the eighth and ninth data lines D8 and D9. The eighth sub-pixel P8 may be electrically connected to the second gate line G2.

The ninth sub-pixel P9 is electrically connected to the second gate line G2. The tenth sub-pixel P10 is electrically connected to the second gate line G2. The eleventh sub-pixel P11 is electrically connected to the third gate line G3. The twelfth sub-pixel P12 is electrically connected to the third gate line G3.

According to an embodiment of the present inventive concept, the first sub-pixel PI, the fifth sub-pixel P5 and the eleventh sub-pixel P11 display a first color. The second sub-pixel P2, the sixth sub-pixel P6 and the twelfth sub-pixel P12 display a second color. The third sub-pixel P3, the seventh sub-pixel P7 and the ninth sub-pixel P9 display a third color. The fourth sub-pixel P4, the eighth sub-pixel P8 and the tenth sub-pixel P10 display a fourth color.

The first color is red. The second color is green. The third color is blue. The fourth color is white. In examples not covered by the claimed invention first through fourth colors may be different from the color red, the color green, the color blue, and the color white.

Polarities of the data voltages applied to the data lines will be described in detail with reference to FIGS. 3A and 3B.

FIG. 2B illustrates a diagram of a pixel arrangement of a display panel of the display apparatus illustrated in FIG. 1, according to an example not covered by the claimed invention

Referring to FIGS. 1 and 2B, according to an example not covered by the claimed invention the first sub-pixel P1 is disposed between the first and second data lines D1 and D2, The first sub-pixel P1 may be electrically connected to the second gate line G2. The second sub-pixel P2 may be disposed between the second and third data lines D2 and D3. The second sub-pixel P2 may be electrically connected to the first gate line G1. The third sub-pixel P3 may be disposed between the third and fourth data lines D3 and D4. The third sub-pixel P3 may be electrically connected to the first gate line G1. The fourth sub-pixel P4 may be disposed between the fourth and fifth data lines D4 and D5. The fourth sub-pixel P4 may be electrically connected to the second gate line G2.

According to an example not covered by the claimed invention the fifth sub-pixel P5 is disposed between the fifth and sixth data lines D5 and D6. The fifth sub-pixel P5 may be electrically connected to the second gate line G2. The sixth sub-pixel P6 may be disposed between the sixth and seventh data lines D6 and D7. The sixth sub-pixel P6 may be electrically connected to the first gate line G1. The seventh sub-pixel P7 may be disposed between the seventh and eighth data lines D7 and D8. The seventh sub-pixel P7 may be electrically connected to the first gate line G1. The eighth sub-pixel P8 may be disposed between the eighth and ninth data lines D8 and D9. The eighth sub-pixel P8 may be electrically connected to the second gate line G2.

The ninth sub-pixel P9 may be electrically connected to the third gate line G3. The tenth sub-pixel P10 may be electrically connected to the second gate line G2. The eleventh sub-pixel P11 may be electrically connected to the second gate line G2. The twelfth sub-pixel P12 may be electrically connected to the third gate line G3.

FIG. 2C illustrates a diagram of a pixel arrangement of a display panel of the display apparatus illustrated in FIG. 1, according to an example not covered by the claimed invention.

Referring to FIGS. 1 and 2C, according to an example not covered by the claimed invention, the first sub-pixel P1 is disposed between the first and second data lines D1 and D2. The first sub-pixel P1 may be electrically connected to the second gate line G2. The second sub-pixel P2 may be disposed between the second and third data lines D2 and D3. The second sub-pixel P2 may be electrically connected to the second gate line G2. The third sub-pixel P3 may be disposed between the third and fourth data lines D3 and D4. The third sub-pixel P3 may be electrically connected to the first gate line G1. The fourth sub-pixel P4 may be disposed between the fourth and fifth data lines D4 and D5. The fourth sub-pixel P4 may be electrically connected to the first gate line G1.

According to an example not covered by the claimed invention, the fifth sub-pixel P5 is disposed between the fifth and sixth data lines D5 and D6. The fifth sub-pixel P5 may be electrically connected to the second gate line G2. The sixth sub-pixel P6 may be disposed between the sixth and seventh data lines D6 and D7. The sixth sub-pixel P6 may be electrically connected to the second gate line G2. The seventh sub-pixel P7 may be disposed between the seventh and eighth data lines D7 and D8. The seventh sub-pixel P7 may be electrically connected to the first gate line G1. The eighth sub-pixel P8 may be disposed between the eighth and ninth data lines D8 and D9. The eighth sub-pixel P8 may be electrically connected to the first gate line G1.

The ninth sub-pixel P9 may be electrically connected to the third gate line G3. The tenth sub-pixel P10 may be electrically connected to the third gate line G3. The eleventh sub-pixel P11 may be electrically connected to the second gate line G2. The twelfth sub-pixel P12 may be electrically connected to the second gate line G2.

FIG. 2D illustrates a diagram of a pixel arrangement of a display panel of the display apparatus illustrated in FIG. 1, according an example not covered by the claimed invention.

Referring to FIGS. 1 and 2D, according to an example not covered by the claimed invention, the first sub-pixel P1 is disposed between the first and second data lines D1 and D2. The first sub-pixel P1 may be electrically connected to the first gate line G1. The second sub-pixel P2 may be disposed between the second and third data lines D2 and D3. The second sub-pixel P2 may be electrically connected to the second gate line G2. The third sub-pixel P3 may be disposed between the third and fourth data lines D3 and D4. The third sub-pixel P3 may be electrically connected to the second gate line G2. The fourth sub-pixel P4 may be disposed between the fourth and fifth data lines D4 and D5. The fourth sub-pixel P4 may be electrically connected to the first gate line G1.

According to an example not covered by the claimed invention the fifth sub-pixel P5 is disposed between the fifth and sixth data lines D5 and D6. The fifth sub-pixel P5 may be electrically connected to the first gate line G1. The sixth sub-pixel P6 may be disposed between the sixth and seventh data lines D6 and D7. The sixth sub-pixel P6 may be electrically connected to the second gate line G2. The seventh sub-pixel P7 may be disposed between the seventh and eighth data lines D7 and D8. The seventh sub-pixel P7 may be electrically connected to the second gate line G2. The eighth sub-pixel P8 may be disposed between the eighth and ninth data lines D8 and D9. The eighth sub-pixel P8 may be electrically connected to the first gate line G1.

The ninth sub-pixel P9 may be electrically connected to the second gate line G2. The tenth sub-pixel P10 may be electrically connected to the third gate line G3. The eleventh sub-pixel P11 may be electrically connected to the third gate line G3. The twelfth sub-pixel P12 may be electrically connected to the second gate line G2.

According to embodiment of the present inventive concept, the sub-pixels are arranged in a row (e.g., between two adjacent gate lines) are alternately connected to the upper gate line and to the lower gate line in duos (e.g., a pair of two sub-pixels). Referring to FIG. 2A, a first duo, including sub-pixel P1 and sub-pixel P2, is connected to the upper gate line (e.g., the first gate line G1). A second duo, including sub-pixel P3 and sub-pixel P4, is connected to the lower gate line (e.g., the second gate line G2). According to exemplary embodiments of the present inventive concept, sub-pixels disposed between two adjacent gate lines are alternately connected to the upper and lower gate lines in units of two sub-pixels. In sub-pixels displaying the first color, the first sub-pixel P1 is connected to the first gate line G1 which is the upper gate line of the first sub-pixel P1 the eleventh sub-pixel P11 is connected to the third gate line G3 which is the lower gate line of the eleventh sub-pixel P11. According to an example not covered by the claimed invention when the first sub-pixel P1 is connected to the second gate line G2 which is the lower gate line of the first sub-pixel P1, the eleventh sub-pixel P11 is connected to the second gate line G2 which is the upper gate line of the eleventh sub-pixel P11. Accordingly, a pair of sub-pixels displaying the same color, from among sub-pixels located in two consecutive (e.g., adjacent) rows, are alternately connected to gate lines located in different directions (e.g., upper and lower gates) with respect to each of the sub-pixels. Thus, a difference in brightness between two sub-pixels displaying the same color and arranged in adjacent rows may be reduced when the sub-pixels alternately connect to the upper gate line and the lower gate line, respectively, with respect to the gate lines surrounding the sub-pixels.

FIG. 3A illustrates a diagram indicating a polarity of each data line of the display panel illustrated in FIG. 2A according to an example not covered by the claimed invention.

Referring to FIGS. 1 and 3A, according to an example not covered by the claimed invention data voltages having a first polarity are output to the first data line D1. Data voltages having the first polarity may be output to the second data line D2. Data voltages having a second polarity different from the first polarity may be output to the third data line D3. Data voltages having the second polarity may be output to the fourth data line D4.

Data voltages having the first polarity may be output to the fifth data line D5. Data voltages having the first polarity may be output to the sixth data line D6. Data voltages having the second polarity may be output to the seventh data line D7. Data voltages having the second polarity may be output to the eighth data line D8.

According to an embodiment of the present inventive concept, the first polarity may be a positive polarity with respect to a common voltage. The second polarity may be a negative polarity with respect to the common voltage. Alternatively, the first polarity may be the negative polarity. The second polarity may be the positive polarity.

The polarities of the data voltages may be inversed by each frame.

FIG. 3B illustrates a diagram indicating a polarity of each data line of the display panel illustrated in FIG. 2A, according to embodiments of the claimed invention.

Referring to FIGS. 1 and 3B, according to an embodiment of the claimed invention, data voltages having a first polarity are output to the first data line D1. Data voltages having a second polarity different from the first polarity are output to the second data line D2. Data voltages having the second polarity are output to the third data line D3. Data voltages having the first polarity are output to the fourth data line D4.

Data voltages having the first polarity may be output to the fifth data line D5. Data voltages having the second polarity may be output to the sixth data line D6. Data voltages having the second polarity may be output to the seventh data line D7. Data voltages having the first polarity may be output to the eighth data line D8.

According to an embodiment of the present inventive concept, the first polarity may be a positive polarity with respect to a common voltage. The second polarity may be a negative polarity with respect to the common voltage. Alternatively, the first polarity may be the negative polarity. The second polarity may be the positive polarity.

The polarities of the data voltages may be inversed by each frame.

According to the embodiments of the present inventive concept, data voltages having different polarities from each other are applied to sub-pixels displaying the same color in two line intervals. Thus, flicker and vertical line caused when data voltages having the same polarities are applied to adjacent sub-pixels may be reduced.

The foregoing disclosure is illustrative of the present inventive concept and is not to be construed as limiting the present inventive concept thereto. Those skilled in the art will readily appreciate that many modifications may be made to the disclosed embodiments without materially departing from the scope of the claimed invention. Accordingly, all such modifications are intended to be covered by the scope of the present inventive concept as defined in the claim 1.

## Claims

1. A display apparatus comprising:
a data driver (500) configured to output data voltages to a plurality of data lines;
a gate driver (300) configured to output gate voltages to a plurality of gate lines; and
a display panel (100),
the display panel (100) further comprising:
a plurality of gate lines extending in a first direction (DR1) and comprising first (G1), second (G2), third (G3) and fourth (G4) gate lines arranged adjacent to each other;
a plurality of data lines extending in a second direction (DR2) that crosses the first direction (DR1) and comprising first (D1), second (D2), third (D3) and fourth (D4) data lines arranged sequentially; and
a plurality of sub-pixels arranged in a matrix configuration, each row of the matrix being disposed between two adjacent gate lines, from among the plurality of gate lines, each column of the matrix being disposed between two adjacent data lines, from among the plurality of data lines, the plurality of sub-pixels comprising:
first column sub-pixels disposed on a first column (PC1) of the matrix, wherein sub-pixels in the first column are connected to the first data line (D1);
second column sub-pixels disposed on a second column (PC2) of the matrix, wherein sub-pixels in the second column are connected to the second data line (D2), the second column (PC2) being adjacent to the first column (PC1);
third column sub-pixels disposed on third column of the matrix, wherein sub-pixels in the third column are connected to the third data line (D3), the third column being adjacent to the second column (PC2);
fourth column sub-pixels disposed on fourth column of the matrix, wherein sub-pixels in the fourth column are connected to the fourth data line (D4), the fourth column being adjacent to the third column;
first row sub-pixels disposed on a first row (PR1) of the matrix and alternately connected to the first (G1) and second (G2) gate lines in units of two sub-pixels; and
second row sub-pixels disposed on a second row (PR2) of the matrix and alternately connected to the second (G2) and third (G3) gate lines in units of two sub-pixels,
third row sub-pixels disposed on a third row of the matrix and alternately connected to the third (G3) and fourth (G4) gate lines in units of two sub-pixels; and
wherein the first row sub-pixels comprises first (P1) through fourth (P4) sub-pixels disposed between the first (G1) and second (G2) gate lines and sequentially arranged along the first direction (DR1),
wherein the first (P1) and second (P2) sub-pixels are connected to the first gate line (G1) and the third (P3) and fourth (P4) sub-pixels are connected to the second gate line (G2),
wherein the first sub-pixel (P1) displays a first color, the second sub-pixel (P2) displays a second color, the third sub-pixel (P3) displays a third color, and the fourth sub-pixel (P4) displays a fourth color,
wherein the first color is red, the second color is green, the third color is blue, and the fourth color is white,
wherein the second row sub-pixels comprises ninth (P9) through twelfth (P12) sub-pixels disposed between the second (G2) and third (G3) gate lines and sequentially arranged along the first direction (DR1),
wherein the ninth (P9) sub-pixel displays the third color, the tenth (P10) sub-pixel displays the fourth color, the eleventh (P11) sub-pixel displays the first color, and the twelfth (P12) sub-pixel displays the second color,
wherein the third row sub-pixels comprises seventeenth through twentieth sub-pixels disposed between the third (G3) and fourth (G4) gate lines and sequentially arranged along the first direction (DR1),
wherein the seventeenth sub-pixel displays the first color, the eighteenth sub-pixel displays the second color, the nineteenth sub-pixel displays the third color, and the twentieth sub-pixel displays the second color,
the data driver (500) is configured to output data voltages having a first polarity to the first (D1) and the fourth (D4) data lines, the first data line (D1) being connected to the first (P1), ninth (P9) and seventeenth sub-pixels, and the fourth (D4) data line being connected to the fourth (P4), twelfth (P12) and twentieth sub-pixels; and the data driver (500) is configured to output data voltages having a second polarity to the second (D2) and the third (D3) data lines, the second polarity being different from the first polarity, the second data line (D2) being connected to the second (P2), tenth (P10) and eighteenth sub-pixels, and the third (D3) data line being connected to the third (P3), eleventh (P11) and nineteenth sub-pixels.

## Patentansprüche

1. Anzeigegerät, Folgendes umfassend:
einen Datentreiber (500), welcher konfiguriert ist, um Datenspannungen an eine Vielzahl von Datenleitungen auszugeben;
einen Gatetreiber (300), welcher konfiguriert ist, um Gatespannungen an eine Vielzahl von Gateleitungen auszugeben; und
eine Anzeigetafel (100),
wobei die Anzeigetafel (100) ferner Folgendes umfasst:
eine Vielzahl von Gateleitungen, welche sich in eine erste Richtung (DR1) erstreckt und eine erste (G1), eine zweite (G2), eine dritte (G3) und eine vierte (G4) Gateleitung umfasst, welche benachbart angeordnet sind;
eine Vielzahl von Datenleitungen, welche sich in eine zweite Richtung (DR2) erstreckt, welche die erste Richtung (DR1) kreuzt und eine erste (D1), eine zweite (D2), eine dritte (D3) und eine vierte (D4) Datenleitung umfasst, welche sequenziell angeordnet sind; und
eine Vielzahl von in einer Matrixkonfiguration angeordneten Sub-Pixeln, wobei jede Reihe der Matrix zwischen zwei benachbarten Gateleitungen aus der Vielzahl von Gateleitungen befindlich ist, wobei jede Spalte der Matrix zwischen zwei benachbarten Datenleitungen aus der Vielzahl von Datenleitungen befindlich ist, wobei die Vielzahl von Sub-Pixeln Folgendes umfasst:
erste Spalten-Sub-Pixel, welche an einer ersten Spalte (PC1) der Matrix befindlich sind, wobei die Sub-Pixel in der ersten Spalte mit der ersten Datenleitung (D1) verbunden sind;
zweite Spalten-Sub-Pixel, welche an einer zweiten Spalte (PC2) der Matrix befindlich sind, wobei die Sub-Pixel in der zweiten Spalte mit der zweiten Datenleitung (D2) verbunden sind, wobei die zweite Spalte (PC2) benachbart zur ersten Spalte (PC1) liegt;
dritte Spalten-Sub-Pixel, welche an einer dritten Spalte der Matrix befindlich sind, wobei die Sub-Pixel in der dritten Spalte mit der dritten Datenleitung (D3) verbunden sind, wobei die dritte Spalte benachbart zur zweiten Spalte (PC2) liegt;
vierte Spalten-Sub-Pixel, welche an einer vierten Spalte der Matrix befindlich sind, wobei die Sub-Pixel in der vierten Spalte mit der vierten Datenleitung (D4) verbunden sind, wobei die vierte Spalte benachbart zur dritten Spalte liegt;
Sub-Pixel der ersten Reihe, welche an einer ersten Reihe (PR1) der Matrix befindlich und alternierend mit der ersten (G1) und der zweiten (G2) Gateleitung in Einheiten von zwei Sub-Pixeln verbunden sind; und
Sub-Pixel der zweiten Reihe, welche an einer zweiten Reihe (PR2) der Matrix befindlich sind und alternierend mit der zweiten (G2) und der dritten (G3) Gateleitung in Einheiten von zwei Sub-Pixeln verbunden sind,
Sub-Pixel der dritten Reihe, welche an einer dritten Reihe der Matrix befindlich und alternierend mit der dritten (G3) und der vierten (G4) Gateleitung in Einheiten von zwei Sub-Pixeln verbunden sind; und
wobei die Sub-Pixel der ersten Reihe einen ersten (P1) bis vierten (P4) Sub-Pixel umfassen, welche zwischen der ersten (G1) und der zweiten (G2) Gateleitung befindlich und sequenziell entlang der ersten Richtung (DR1) angeordnet sind,
wobei der erste (P1) und der zweite (P2) Sub-Pixel mit der ersten Gateleitung (G1) verbunden sind und der dritte (P3) und der vierte (P4) Sub-Pixel mit der zweiten Gateleitung (G2) verbunden sind,
wobei der erste Sub-Pixel (P1) eine erste Farbe anzeigt, der zweite Sub-Pixel (P2) eine zweite Farbe anzeigt, der dritte Sub-Pixel (P3) eine dritte Farbe anzeigt und der vierte Sub-Pixel (P4) eine vierte Farbe anzeigt,
wobei die erste Farbe Rot ist, die zweite Farbe Grün ist, die dritte Farbe Blau ist und die vierte Farbe Weiß ist,
wobei die Sub-Pixel der zweiten Reihe einen neunten (P9) bis zwölften (P12) Sub-Pixel umfassen, welche zwischen der zweiten (G2) und der dritten (G3) Gateleitung befindlich und sequenziell entlang der ersten Richtung (DR1) angeordnet sind,
wobei der neunte (P9) Sub-Pixel die dritte Farbe anzeigt, der zehnte (P10) Sub-Pixel die vierte Farbe anzeigt, der elfte (P11) Sub-Pixel die erste Farbe anzeigt und der zwölfte (P12) Sub-Pixel die zweite Farbe anzeigt,
wobei die Sub-Pixel der dritten Reihe einen siebzehnten bis zwanzigsten Sub-Pixel umfassen, welche zwischen der dritten (G3) und der vierten (G4) Gateleitung befindlich und sequenziell entlang der ersten Richtung (DR1) angeordnet sind,
wobei der siebzehnte Sub-Pixel die erste Farbe anzeigt, der achtzehnte Sub-Pixel die zweite Farbe anzeigt, der neunzehnte Sub-Pixel die dritte Farbe anzeigt und der zwanzigste Sub-Pixel die zweite Farbe anzeigt,
der Datentreiber (500) konfiguriert ist, um Datenspannungen, welche eine erste Polarität aufweisen, an die erste (D1) und die vierte (D4) Datenleitung auszugeben, wobei die erste Datenleitung (D1) mit dem ersten (P1), dem neunten (P9) und dem siebzehnten Sub-Pixel verbunden ist, und die vierte (D4) Datenleitung mit dem vierten (P4), dem zwölften (P12) und dem zwanzigsten Sub-Pixel verbunden ist; und
der Datentreiber (500) konfiguriert ist, um Datenspannungen, welche eine zweite Polarität aufweisen, an die zweite (D2) und die dritte (D3) Datenleitung auszugeben, wobei die zweite Polarität sich von der ersten Polarität unterscheidet, wobei die zweite Datenleitung (D2) mit dem zweiten (P2), dem zehnten (P10) und dem achtzehnten Sub-Pixel verbunden ist, und die dritte (D3) Datenleitung mit dem dritten (P3), dem elften (P11) und dem neunzehnten Sub-Pixel verbunden ist.

## Revendications

1. Appareil d'affichage comprenant :
un pilote de données (500) configuré pour émettre en sortie des tensions de données à une pluralité de lignes de données ;
un pilote de grille (300) configuré pour émettre en sortie des tensions de grille à une pluralité de lignes de grille ; et
un panneau d'affichage (100),
le panneau d'affichage (100) comprenant en outre :
une pluralité de lignes de grille s'étendant dans un premier sens (DR1) et comprenant une première (G1), une deuxième (G2), une troisième (G3) et une quatrième (G4) lignes de grille agencées adjacentes l'une à l'autre ;
une pluralité de lignes de données s'étendant dans un deuxième sens (DR2) qui croise le premier sens (DR1) et comprenant une première (D1), une deuxième (D2), une troisième (D3) et une quatrième (D4) lignes de données agencées séquentiellement ; et
une pluralité de sous-pixels agencés dans une configuration matricielle, chaque ligne de la matrice étant disposée entre deux lignes de grille adjacentes parmi la pluralité de lignes de grille, chaque colonne de la matrice étant disposée entre deux lignes de données adjacentes parmi la pluralité de lignes de données, la pluralité de sous-pixels comprenant :
des premiers sous-pixels de colonne disposés sur une première colonne (PC1) de la matrice, dans lequel des sous-pixels dans la première colonne sont connectés à la première ligne de données (D1) ;
des deuxièmes sous-pixels de colonne disposés sur une deuxième colonne (PC2) de la matrice, dans lequel des sous-pixels dans la deuxième colonne sont connectés à la deuxième ligne de données (D2), la deuxième colonne (PC2) étant adjacente à la première colonne (PC1) ;
des troisièmes sous-pixels de colonne disposés sur une troisième colonne de la matrice, dans lequel des sous-pixels dans la troisième colonne sont connectés à la troisième ligne de données (D3), la troisième colonne étant adjacente à la deuxième colonne (PC2) ;
des quatrièmes sous-pixels de colonne disposés sur une quatrième colonne de la matrice, dans lequel des sous-pixels dans la quatrième colonne sont connectés à la quatrième ligne de données (D4), la quatrième colonne étant adjacente à la troisième colonne ;
des sous-pixels de la première ligne disposés sur une première ligne (PR1) de la matrice et connectés de manière alternante à la première (G1) et à la deuxième (G2) lignes de grille en unités de deux sous-pixels ; et
des sous-pixels de la deuxième ligne disposés sur une deuxième ligne (PR2) de la matrice et connectés de manière alternante à la deuxième (G2) et à la troisième (G3) lignes de grille en unités de deux sous-pixels,
des sous-pixels de la troisième ligne disposés sur une troisième ligne de la matrice et connectés de manière alternante à la troisième (G3) et à la quatrième (G4) lignes de grille en unités de deux sous-pixels ; et
dans lequel les sous-pixels de la première ligne comprennent des premier (P1) à quatrième (P4) sous-pixels disposés entre la première (G1) et la deuxième (G2) lignes de grille et agencés séquentiellement le long du premier sens (DR1),
dans lequel les premier (P1) et deuxième (P2) sous-pixels sont connectés à la première ligne de grille (G1) et les troisième (P3) et quatrième (P4) sous-pixels sont connectés à la deuxième ligne de grille (G2),
dans lequel le premier sous-pixel (P1) affiche une première couleur, le deuxième sous-pixel (P2) affiche une deuxième couleur, le troisième sous-pixel (P3) affiche une troisième couleur, et le quatrième sous-pixel (P4) affiche une quatrième couleur,
dans lequel la première couleur est le rouge, la deuxième couleur est le vert, la troisième couleur est le bleu, et la quatrième couleur est le blanc,
dans lequel les sous-pixels de la deuxième ligne comprennent des neuvième (P9) à douzième (P12) sous-pixels disposés entre la deuxième (G2) et la troisième (G3) lignes de grille et agencés séquentiellement le long du premier sens (DR1),
dans lequel le neuvième (P9) sous-pixel affiche la troisième couleur, le dixième (P10) sous-pixel affiche la quatrième couleur, le onzième (P11) sous-pixel affiche la première couleur, et le douzième (P12) sous-pixel affiche la deuxième couleur,
dans lequel les sous-pixels de la troisième ligne comprennent des dix-septième à vingtième sous-pixels disposés entre la troisième (G3) et la quatrième (G4) lignes de grille et agencés séquentiellement le long du premier sens (DR1),
dans lequel le dix-septième sous-pixel affiche la première couleur, le dix-huitième sous-pixel affiche la deuxième couleur, le dix-neuvième sous-pixel affiche la troisième couleur, et le vingtième sous-pixel affiche la deuxième couleur,
le pilote de données (500) est configuré pour émettre en sortie des tensions de données ayant une première polarité à la première (D1) et à la quatrième (D4) ligne de données, la première ligne de données (D1) étant connectée au premier (P1), au neuvième (P9) et au dix-septième sous-pixels, et la quatrième (D4) ligne de données étant connectée au quatrième (P4), au douzième (P12) et au vingtième sous-pixels ; et
le pilote de données (500) est configuré pour émettre en sortie des tensions de données ayant une deuxième polarité à la deuxième (D2) et à la troisième (D3) ligne de données, la deuxième polarité étant différente de la première polarité, la deuxième ligne de données (D2) étant connectée au deuxième (P2), au dixième (P10) et au dix-huitième sous-pixels, et la troisième (D3) ligne de données étant connectée au troisième (P3), au onzième (P11) et au dix-neuvième sous-pixels.
